# EUROPÄISCHE PATENTSCHRIFT

(11) **EP 0 982 831 B1**
(45) Veröffentlichungstag und Bekanntmachung des Hinweises auf die Patenterteilung: **05.10.2011**
(21) Anmeldenummer: 99116011.0
(22) Anmeldetag: 14.08.1999
(51) Int. Cl.: H02J 7/02

(54) **Ladevorrichtung für Akkumulatoren in einem mobilen elektrischen Gerät mit induktiver Energieübertragung**
Charging arrangement using inductive energy transfer for batteries in a mobile device
Dispositif de charge à transfert d'énergie par induction pour batterie dans un appareil électrique mobile

(30) Priorität: 19.08.1998 DE 19837675
(43) Veröffentlichungstag der Anmeldung: 01.03.2000
(73) Patentinhaber: Salcomp Oyj, 24100 Salo (FI)
(72) Erfinder: Brockmann, Hans-Jürgen, 25130 Muurla (FI); Turtiainen, Heikki, 02760 Espoo (FI)
(74) Vertreter: Suominen, Kaisa Liisa

(56) Entgegenhaltungen:
- EP-A- 0 533 247
- EP-A- 0 535 408
- EP-A1- 0 642 203
- WO-A1-96/08068
- DE-A- 19 741 279

## Beschreibung

Die Erfindung betrifft eine Steuerung für eine Ladevorrichtung zum Aufladen von Akkumulatoren in einem mobilen elektrischen Gerät, wie beispielsweise einem Mobiltelefon, einem schnurlosen Telefon oder ähnliches. Dabei wird Energie von der Ladevorrichtung zum mobilen Gerät mit einem magnetischen Wechselfeld induktiv übertragen. Die Steuerung erkennt ein angekoppeltes mobiles elektrisches Gerät, welches eine entsprechende Einrichtung zur induktiven Leistungsübertragung ausweist und welches Wirkleistung zum Laden aufnimmt. Die Erfindung ermöglicht ein intelligentes Steuern der induktiv übertragenen Leistung zum Verhindern von langen Leerlaufzeiten und zum Vermeiden von Schäden durch unzulässige induktive Erwärmung. Die Erfindung betrifft außerdem die entsprechende Einrichtung im mobilen Gerät, welche mit einer Ladevorrichtung gemäß der Erfindung zusammenarbeitet.

Besonders vorteilhaft ist die Erfindung für kompakte und leichte Mobiltelefone und schnurlose Telefone anwendbar, die von Akkumulatoren mit hoher Energiedichte betrieben werden.

Induktive Ladevorrichtungen für Mobiltelefone sind bereits bekannt. Beispielsweise betrifft die Druckschrift GB-A-2 291 291 eine kontaktlose Ladevorrichtung mit einer Primärwicklung, die Ladeenergie ohne direkten elektrischen Kontakt zu einer Sekundärwicklung in einem Mobiltelefon koppelt, um Akkumulatoren über einen Ladegleichrichter zu laden. Die Primärwicklung wird von einem Leistungsoszillator erregt. Bei dieser Vorrichtung stellt offenbar die Zugkraft des magnetischen Koppelfeldes ein Problem dar, wenn das Mobiltelefon während des Ladens für Anrufe von der Ladevorrichtung getrennt wird. Um das magnetische Koppelfeld während der Benutzung abzuschalten, sendet das Mobiltelefon bei einem ankommenden Telefonruf bzw. beim Betätigen von bestimmten Tasten seiner Tastatur ein IR-Signal zur Ladevorrichtung, um den Leistungsoszillator anzuhalten. Dieses kann außerdem auch mit einem mechanischen Schalter ausgelöst werden, der sich im Gehäuse der Ladevorrichtung befindet. Mit dem Schalter wird die Ladevorrichtung auch manuell ein- und ausgeschaltet. Nach einer Erweiterung der Lösung ist vorgesehen, diesen mechanischen Schalter mit dem Eigengewicht des Mobiltelefons zu betätigen und die Vorrichtung durch Aufstecken des Mobiltelefons einzuschalten.

Es ist jedoch nicht vorgesehen, die Stromzufuhr selbsttätig abzuschalten, wenn die Akkumulatoren ausreichend geladenen ist. Darüber hinaus kann die Ladevorrichtung auch nicht erkennen, ob tatsächlich ein Mobiltelefon die Vorrichtung einschaltet.

Für eine hohe Mobilität und einer kontinuierlichen Nutzung des Gerätes weisen Akkumulatoren beispielsweise in einem Mobiltelefon eine hohe Kapazität auf und müssen in kürzester Zeit mit Netzenergie oder der Bordspannung eines Fahrzeuges regeneriert werden.

Dafür ist eine extrem leichte und kompakte Ladevorrichtung nötig, welche für kurze Ladezeiten in sogenannten Schnelladungen relativ viel Leistung in das mobile Gerät speist. Wegen der Kompaktheit von Mobiltelefonen können nur induktive Koppler mit geringen Dimensionen eingesetzt werden, welche die Leistung mit geringen Verlusten und einem Minimum an Steuer- und Kontrollaufwand zu den Akkumulatoren führen. Im Interesse der Zuverlässigkeit und des Komforts sollen Ladevorrichtung und das entsprechende mobile Gerät möglichst als selbsttätiges System miteinander arbeiten. Das bedeutet, die Ladevorrichtung muß bei entferntem mobilen Gerät oder, wenn die Akkus bereits geladen sind, immer automatisch in einen Wartebetrieb schalten. Im Wartebetrieb darf die Ladevorrichtung unbegrenzt ohne Probleme hinsichtlich Sicherheit und Zuverlässigkeit mit einer Energiequelle, wie dem Ortsnetz oder dem Bordnetz eines Kraftfahrzeuges, verbunden sein. Dabei soll die Vorrichtung ein Minimum an Leistung aufnehmen und darf nur wenig magnetische Leistung aussenden. Somit wird vermieden, daß sich metallische Gegenstände in der Umgebung oder ein mechanisch angekoppeltes Gerät ohne induktiven Koppler bzw. mit geladenem Akku infolge magnetischer Induktion unzulässig hoch erwärmen. Nur wenn ein Gerät mit entsprechendem induktiven Koppler benutzt wird, das zum Laden dem magnetischen Wechselfeld Wirkleistung entnimmt, darf sich die Ladevorrichtung einschalten und das magnetische Wechselfeld kontinuierlich aussenden.

Eine induktive Ladevorrichtung, die diese Forderungen erfüllt, wurde bereits in der älteren deutschen Patentanmeldung DE- 197 41 279 beschrieben. Dort wurde ausgeführt, daß sich für eine induktive Übertragung besonders gut ein Resonanzwandler mit Resonanzkreisen sowohl auf der Primär- als auch auf der Sekundärseite eignet. Der Resonanzwandler ist als Leistungs-Gegentakt-Oszillator mit kapazitiver Mitkopplung ausgeführt, kann bei geringem Schaltungsaufwand mit unterschiedlichen Belastungen betrieben werden und zeichnet sich durch geringe Störemission im hochfrequenten Bereich und eine geringe Verlustleistung aus. Außerdem können ohne Probleme Schaltfrequenzen oberhalb von 500 kHz realisiert werden, wodurch im induktiven Koppler U-förmige Ferritkerne mit geringem Volumen und Gewicht einsetzbar sind.

In jedem Gegentaktzweig des Oszillators befindet sich ein separater Resonanzkreis mit einer Induktivität, die von einer Primärwicklung des Kopplers gebildet wird. Beide Primärwicklungen sind zwar auf einem gemeinsamen Kern jedoch räumlich von einander getrennt angeordnet, so dass jede in einem anderen Raumbereich ein magnetisches Wechselfeld erzeugt, welches separat beeinflussbar ist. Die Schwingkreise der Gegentaktzweige weisen infolge der von einander getrennt angeordneten Primärwicklungen eine geringe magnetische Kopplung auf und reagieren bei ungleicher Belastung der Raumbereiche entsprechend differenziert.

Da Fremdkörper in der Regel ungleiche Belastungen verursachen, können diese in der primären Schaltung an Hand von Differenzen bei bestimmten Strom- und Spannungswerten zwischen den Gegentaktzweigen erkannt werden. Eine Steuerschaltung in der Ladevorrichtung ermittelt deshalb sowohl Differenzen als auch Änderungen in der Stromaufnahme des Oszillators und erkennt damit verschiedene Belastungen im sekundären Teil des magnetischen Wechselfeldes, wie Vollast, Leerlauf und Fehllast durch einen Fremdkörper und reduziert die Energiezufuhr oder schaltet ab.

Praktische Ausführungen der Lösung haben jedoch gezeigt, dass eine präzise Fertigung der Kopplerwicklungen infolge der wenigen Windungen und der kleinen U-Kerne schwierig ist. Folglich treten trotz gleicher sekundärer Belastung in den Gegentaktzweigen verschiedene Spannungs- und Stromwerte auf, so dass die in der Patentanmeldung DE-197 41 279 vorgeschlagene Erkennung ohne ein Einstellen der Symmetrie unbefriedigend arbeitet und ein angekoppeltes Gerät nicht zuverlässig erkennt.

Dokument EP 0 533 247 A zeigt ein System zum Aufladen einer wiederaufladbaren Batterie einer tragbaren Einheit in einem Gestell. Falls ein Steuerungskreis von einem anderen Einheit nach dem Einsetzen der Einheit in das Gestell keine gültige Nachricht erhält, er steuert ein Versorgungskreis um Energie mit einer höheren Rate als normal zur Batterie zu übertragen.

Dokument EP 0 642 203 A1 zeigt eine Induktionsladeeinrichtung, die eine Stromquelleeinheit und eine von der Stromquelleeinheit ablös- bzw. abnehmbare Einrichtungs- bzw. Geräteeinheit hat. Wenn das zweite Gehäuse von dem ersten Gehäuse entfernt wird, ist ein niederdruckbare Teil zum Verhindern der Leckage der Magnetflüsse in eine angehobene Position bewegbar.

Dokument WO 96/08068 A1 zeigt ein Schloss-und-Schlüssel system für das wahlbahren Erlauben oder Hindern von einer Ladeeinrichtung.

Ausgehend vom dargestellten Mangel ist es Aufgabe der Erfindung, eine Lösung zu schaffen, die mit einfachen Mitteln sehr zuverlässig ein entsprechendes angekoppeltes mobiles Gerät und den Ladezustand der Akkumulatoren erkennt, um von einem Wartebetrieb mit reduzierter Übertragung von Leistung in einen Ladebetrieb mit voller Leistungsübertragung umzuschalten.

Zur Lösung der Aufgabe enthält die Ladevorrichtung Erkennungsmittel, welche bei einem periodischen Ändern der induktiven Leistungsaufnahme durch das mobile Gerät im Rhythmus einer Frequenz mindestens ein Steuersignal generieren, um die Leistung, welche die Ladevorrichtung zum mobilen Gerät induktiv überträgt, vom Wartebetrieb auf einen Ladebetrieb mit voller Leistungsabgabe umzuschalten.

Im mobilen Gerät wird der Stromfluss vom sekundären Teil eines induktiven Kopplers zu den Akkumulatoren unabhängig von der Schwingfrequenz des Leistungsoszillators periodisch geändert, so dass die Belastung des Kopplers und damit die Leistungsaufnahme entsprechend alterniert.

Dieses kann einfach mit einem sekundären elektronischen Schalter wie einem Leistungs-FET realisiert werden, der vorteilhaft im hochfrequenten Wechselstromzweig zwischen dem sekundären Kopplerteil und dem Ladegleichrichter angeordnet ist. Eine pulsierende Steuerspannung verbindet periodisch den sekundären Kopplerteil mit dem Ladegleichrichter, so daß die Belastung des gesamten Kopplers zwischen Leerlauf und Vollast alterniert. Die Laständerung erfolgt vorteilhaft mit einer Periodendauer, die einerseits unterhalb der Schwingfrequenz des Leistungsoszillators liegt. Dadurch wechselt die Last des magnetischen Wechselfeldes alternierend jeweils für die Dauer von mehreren periodischen Schwingungen. Die Wirkleistung wird also in Schwingungspaketen, sogenannten Bursts, entnommen. Andererseits wird die Periodendauer hinreichend kurz gewählt, um die Folge der Schwingungspakete leicht als Wechselsignal identifizieren zu können.

Die alternierende Belastung verursacht entsprechende Änderungen der Gegeninduktion im primären Teil des induktiven Kopplers. Damit ändern sich bei einem Leistungsoszillator, der beispielsweise als selbstschwingende Leistungsstufe ausgeführt ist, periodisch verschiedene elektrische Betriebswerte, wie die Stromaufnahme, die Schwingfrequenz des Oszillators und die Schaltphase im Rhythmus der Lastwechsel. Ein einzelner oder mehrere Indikatoren im Verbund ermöglichen durch Selektion und Erfassen der periodischen Lastwechsel, daß die Ladevorrichtung mit Sicherheit ein entsprechendes angekoppeltes mobiles Gerät erkennt. Weder Fremdkörper noch Geräte ohne sekundären Kopplerteil bewirken eine alternierende Belastung.

Der Leistungsoszillator wird vorteilhaft als Resonanzwandler, insbesondere als Leistungs-Gegentakt-Oszillator, beispielsweise wie in der Anmeldung DE 197 41 279 beschrieben, mit kapazitiver Mitkopplung ausgeführt. Dieses hat zwei wesentliche Vorteile:
■ Zum einen folgt eine selbstschwingende Leistungsstufe ohne Leistungsverluste problemlos der alternierenden Belastung auf der Sekundärseite. Dabei tritt in der Leistungsstufe nicht nur eine lastabhängige Amplitudenmodulation auf, sondern auch eine gut detektierbare Frequenz- und Phasenmodulation.
■ Zum anderen ist infolge der hohen Schwingfrequenz, bei der ein Resonanzwandler arbeiten kann, ein guter Abstand zur sekundären Schaltfrequenz, mit der das Umschalten der Last erfolgt, also der Burstfrequenz, zu realisieren.

Beide Eigenschaften ermöglichen auf einfache Weise in der Ladevorrichtung eine AM-, FM- und/oder PM-modulierte Signalkomponente zu gewinnen, welche der Lastmodulation im mobilen Gerät entspricht.

Die modulierte Signalkomponente steht an verschiedenen Punkten zur Verfügung und kann auf verschiedene Art und Weise identifiziert werden. Im einfachsten Fall wird eine durch die Laständerung bewirkte Modulation der Stromamplitude in der Stromzufuhr des Leistungsoszillators identifiziert. Dazu wird der Betriebsstrom über eine Impedanz geführt und der Wechselanteil der an der Impedanz liegenden Spannung verstärkt. Ein Signalgleichrichter stellt in Abhängigkeit von der modulierten Signalkomponente ein entsprechendes Steuersignal bereit, welches anzeigt, daß ein entsprechendes mobiles Gerät an die Ladevorrichtung gekoppelt ist. Von Nachteil ist jedoch, daß die Impedanz, über die der Betriebsstrom zum Leistungsoszillator fließt, elektrische Leistung in Wärme umwandelt.

Dieses kann dadurch vermieden werden, daß anstelle der Lastabhängigkeit der Stromamplitude eine ebenso vorhandene Abhängigkeit der Schwingfrequenz oder der Phase ausgewertet wird. Diese Signalkomponenten werden am Leistungsoszillator ohne Leistungsverlust ausgekoppelt. Das Erkennen erfolgt vorteilhaft mit einem bekannten FM-Demodulator.

Ein Auswerten der AM-, FM- und/oder PM-modulierten Signalkomponente ermöglicht im begrenzten Umfang auch den Ladezustand der Akkumulatoren im angekoppelten mobilen Gerät zu erkennen, um die Leistungszufuhr in der Ladevorrichtung zu reduzieren, wenn diese vollständig geladen sind. Dieses setzt jedoch voraus, daß die Akkumulatoren über eine Ladeschaltung gespeist werden, die beim Erreichen der Sättigung der Akkumulatoren die Stromzufuhr unterbricht. Da danach die Laständerungen wesentlich geringer ausfallen, kann durch Auswerten eines entsprechenden Schwellwertes auf Seiten der Ladevorrichtung die kontinuierliche Erzeugung des magnetischen Wechselfeldes ebenfalls unterbrochen werden.

Die Wahrscheinlichkeit zum Erkennen eines angekoppelten Gerätes, welches nicht bzw. unvollständig geladene Akkus enthält, läßt sich erhöhen, in dem der sekundäre elektronische Schalter im mobilen Gerät in den Regelkreis eines elektronischen Schaltreglers einbezogen wird. Der Regelkreis stabilisiert entweder die Gleichspannung oder den Gleichstrom zum Laden durch periodisches Ein- und Ausschalten. Dadurch stellt sich im Ladebetrieb die Dauer und/oder Häufigkeit der entnommenen Schwingungspakete so ein, daß dem induktiven Koppler während des Schließens des sekundären Schalters immer ein Laststrom mit einer konstanten Amplitude entnommen wird. Wenn die Akkumulatoren jedoch gesättigt sind, unterbricht die Ladeschaltung den Ladebetrieb und es fließt auch kein nennenswerter Laststrom. Der sekundäre Schalter bleibt über lange Perioden offen, so daß auf der Primärseite kein entsprechendes Steuersignal entsteht.

Die Erfindung soll nachstehend an einem Ausführungsbeispiel erläutert werden. Die entsprechenden Zeichnungen zeigen im Einzelnen:
- FIG. 1: eine Ladevorrichtung mit einem angekoppelten mobilen Gerät und Funktionselementen der Steuerung gemäß der Erfindung
- FIG. 2: eine detailliertere Darstellung einer möglichen Ausführung für eine Ladevorrichtung
- FIG. 3: ein mögliches Prinzipschaltbild eines mobilen Gerätes zum Betrieb an einer Ladevorrichtung gemäß der Erfindung.

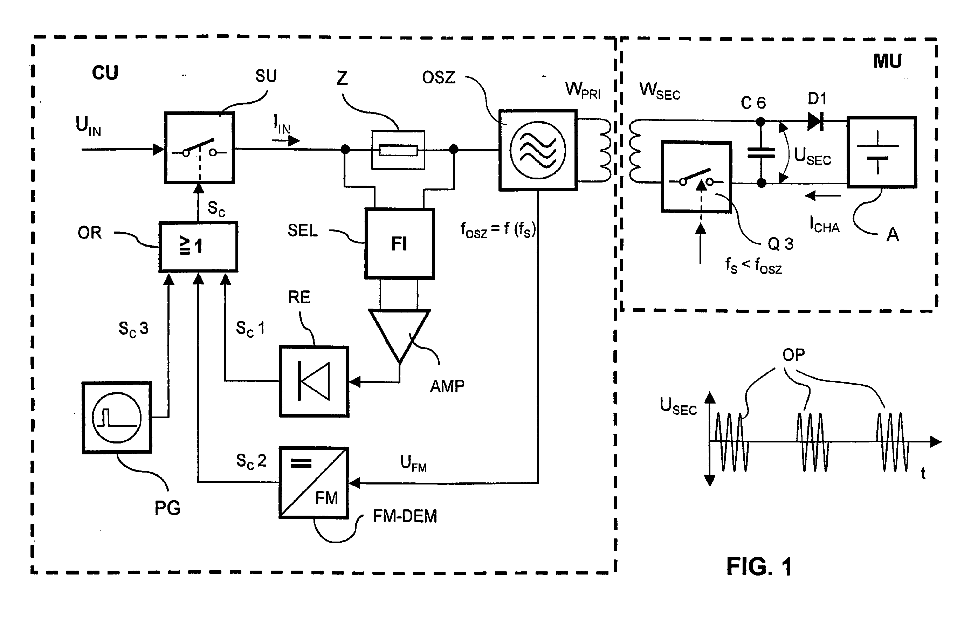

FIG. 1 zeigt eine Ladevorrichtung CU mit den wesentlichen Funktionselementen und ein angekoppeltes mobiles Gerät, im vorliegenden Fall ein Mobiltelefon MU, bei dem nur Funktionselemente gezeigt werden, die für eine Steuerung der Ladevorrichtung CU nötigt sind. Für die Anwendung der Erfindung wird davon ausgegangen, daß die Ladevorrichtung CU ständig mit einer Spannungsquelle, wie dem örtlichen Energienetz oder dem Bordnetz eines Kraftfahrzeuges verbunden ist. Die Spannungsquelle stellt für einen Leistungsoszillator OSZ mit mindestens einer primären Wicklung W_{PRI}, welche als primärer Teil eines induktiven Kopplers dient, ständig eine Eingangsgleichspannung U_{IN} bereit. Die Zufuhr des Betriebsstroms I_{IN} zum Leistungsoszillator OSZ kann von einer primären Schalteinheit SU durch ein Schaltsignal S_{C} unterbrochen werden. Bei einer von einem Ortsnetz gespeisten Ladevorrichtung CU kann auch ein mit dem Steuersignal S_{C} einschaltbarer konventioneller AC/DC-Konverter die Schalteinheit SU bilden, welche Netzwechselspannung in die Eingangsgleichspannung U_{IN} formt. Hat das Steuersignal S_{C} die primäre Schalteinheit SU eingeschaltet, so schwingt der Leistungsoszillator OSZ mit einer Schwingfrequenz f_{OSZ} und der primäre Teil des induktiven Kopplers generiert ein magnetisches Wechselfeld.

Dieses Wechselfeld gelangt zum sekundären Teil des induktiven Kopplers im Mobiltelefon MU, der von einer sekundären Wicklung W_{SEC} dargestellt wird. In Serie zum sekundären Teil liegt ein sekundärer Schalter Q 3 und ein Ladegleichrichter D1. Bei geschlossenem Schalter Q3 induziert das magnetische Wechselfeld in der sekundären Wicklung W_{SEC} einen Induktionsstrom. An der Kapazität C 6 entsteht eine Wechselspannung U_{SEC} mit der Schwingfrequenz f_{OSZ}.

Ein gleichgerichteter Ladestrom I_{CHA} steht zum Laden der Akkumulatoren A zur Verfügung. Der sekundäre Schalter Q 3 wird mit einer sekundären Schaltfrequenz betätigt, so daß ein Laden des Akkumulators den Koppler alternierend belastet. Die sekundäre Schaltfrequenz legt sowohl im Mobiltelefon MU als auch in der Ladevorrichtung CU die Häufigkeit der Schwingungspakete OP fest. Sie wird deshalb nachfolgend als Burstfrequenz f_{BU} bezeichnet. Das Diagramm zeigt den Spannungsverlauf an der Kapazität C6, welcher beim periodischen Betätigen des sekundären Schalters Q 3 entsteht. Die im Diagramm gezeigten Schwingungspakete OP entsprechen der alternierenden Belastung des gesamten induktiven Kopplers. Im Rhythmus der Belastung ändern sich sowohl der Betriebsstrom I_{IN} für den Leistungsoszillator OSZ als auch die Schwingfrequenz f_{OSZ}.

Die Änderungen des Betriebsstroms I_{IN} verursachen an einer Impedanz Z einen entsprechenden Spannungsabfall. Die Impedanz Z kann sowohl ein einfacher Wirkwiderstand, eine Induktivität oder ein Filter sein und an einer beliebigen Stelle in einem Betriebsstromzweig des Leistungsoszillators OSZ liegen. Selektionsmittel SEL, wie beispielsweise ein Bandpaßfilter FI sorgen dafür, daß einem Signalverstärker AMP im wesentlichen nur die Signalkomponente mit der Burstfrequenz f_{BU} zugeführt wird. Ein Signalgleichrichter RE gewinnt aus der Signalkomponente ein erstes Steuersignal S_{C} 1 für eine Oderschaltung OR.

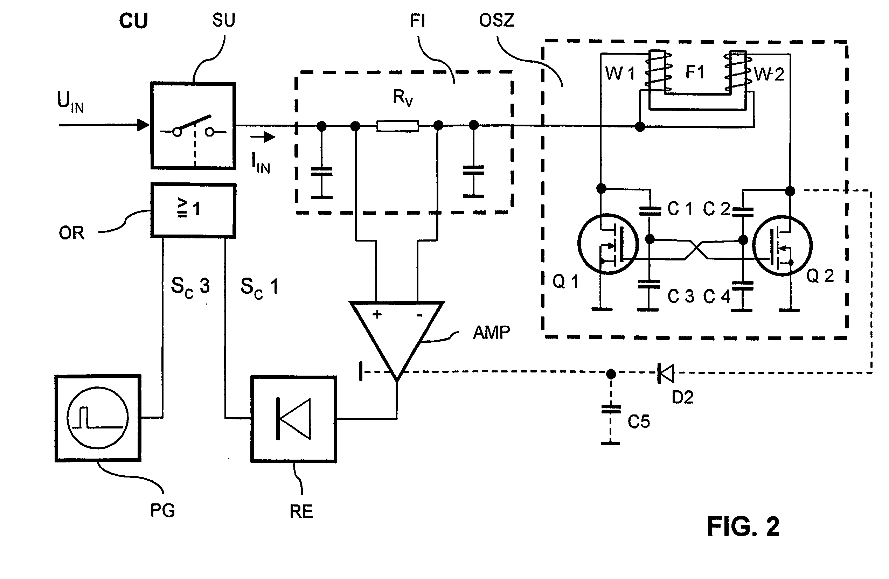

Die Änderungen der Schwingfrequenz f_{OSZ} können ebenfalls an der Impedanz Z oder beispielsweise auch direkt über einem oder beiden in FIG.2 gezeigten primären Schaltern Q1 oder Q2 abgenommen werden. Ein einfacher Frequenzdiskriminator FM-DEM, wie beispielsweise eine induktivitätslose PLL-Schaltung (Phase-Locked Loop), erzeugt ein zweites Steuersignal S_{C} 2. Dafür wird die sich ändernde Schwingfrequenz f_{OSZ} des Resonanzwandlers OSZ mit einer Referenzfrequenz, beispielsweise der eines von den Laständerungen unabhängigen Hilfsoszillators, verglichen. Im vorliegenden Fall sind die Lage und die Stabilität der Referenzfrequenz zweitrangig. Ein sicheres Erkennen der Laständerungen des mobilen Gerätes erfolgt bereits an Hand der Tatsache, daß die PLL-Schaltung eine Wechselspannung mit der Burstfrequenz f_{BU} generiert.

Beide Steuersignale S_{C} 1, S_{C} 2 zeigen, daß an der primären Wicklung W_{PRI} des induktiven Kopplers ein Mobiltelefon MU angekoppelt ist, welches einen nennenswerten Ladestrom I_{CHA} aufnimmt. Praktisch reicht es deshalb aus, nur ein Mittel zum Erkennen einer Größe vorzusehen, welche von der Belastungsänderung abhängt.

Die Oderschaltung OR ist außerdem mit einem Impulsgenerator PG verbunden. Dieser erzeugt unabhängig von den Steuersignalen S_{C} 1 und S_{C} 2 eine niederfrequente Pulsfolge S_{C} 3 zum periodischen Einschalten der primären Schalteinheit SU. Die Pulsfolge S_{C} 3 ist zeitlich so ausgelegt, daß die primäre Schalteinheit SU für eine Aktivierungsdauer T_{ON} einschaltet und für eine Deaktivierungsdauer T_{OFF} >> T_{ON} ausschaltet. Die Aktivierungsdauer T_{ON} wird um ein Mehrfaches größer gewählt als die Periodendauer der Burstfrequenz f_{BU}, so daß der sekundäre Kopplerteil während einer Aktivierungsdauer T_{ON} durch mehrere Schwingungspakete OP belastet wird.

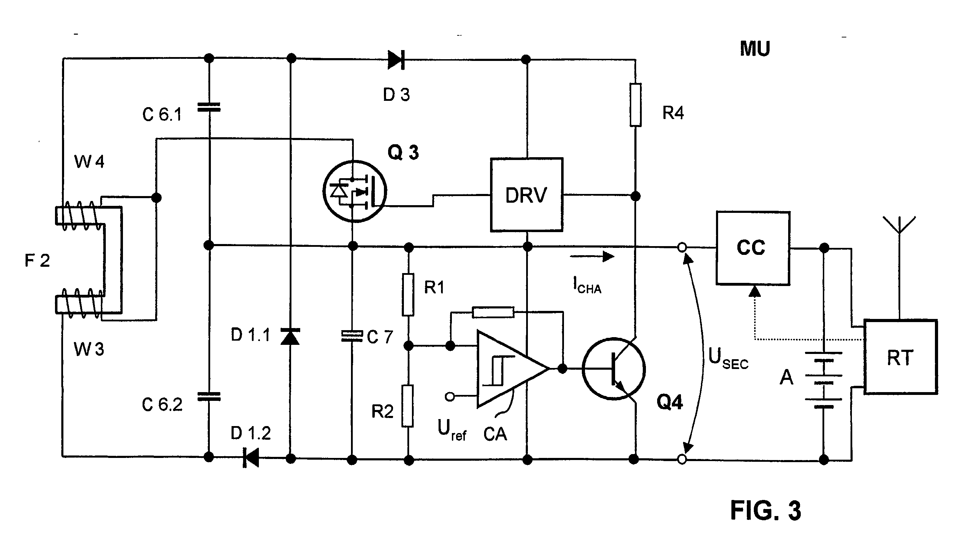

Die Oderschaltung OR realisiert damit folgende Betriebszustände:
■ Ohne ein angekoppeltes Mobiltelefon MU befindet sich die Ladevorrichtung CU in einem ersten, stromarmen Wartebetrieb. Der Impulsgenerator PG schaltet über die primäre Schalteinheit SU den Leistungsoszillator OSZ diskontinuierlich jeweils nur für die Dauer T_{ON} ein und für die wesentlich größere Dauer T_{OFF} wieder aus. Da dem magnetischen Koppler keine Leistung entnommen wird, läßt sich der diskontinuierliche Betrieb der Ladevorrichtung und damit der erste Wartebetrieb mit einer durchschnittlichen Leistungsaufnahme von etwa 0,1 Watt realisieren. Bei dieser geringen Leistungsaufnahme darf die Ladevorrichtung CU problemlos für unbegrenzte Zeit mit der Energiequelle verbunden sein.
■ Der Leistungsoszillator OSZ bleibt nach dem Starten durch den Impulsgenerator PG kontinuierlich in Betrieb, um mit voller Leistung die Akkumulatoren A zu laden. Dieser Ladebetrieb bewirkt nur ein mit der Ladevorrichtung CU gekoppeltes Mobiltelefon MU mit einer sekundären Wicklung W_{SEC} und leeren oder unvollständig geladenen Akkumulatoren A. Nach dem Einschalten des Leistungsoszillators OSZ fließt durch den Impulsgenerator PG ein Ladestrom I_{CHA}. der im Rhythmus der Burstfrequenz f_{BU} den induktiven Koppler belastet. Wie dargestellt, entstehen infolge der wechselnden Belastung die Steuersignale S_{C} 1 und S_{C} 2, welche über die Oderschaltung OR die primäre Schalteinheit SU geschlossen halten.
■ Die Ladevorrichtung CU befindet sich mit angekoppelten mobilen Gerät, deren Akkumulatoren A ihre maximale Kapazität haben, in einem zweiten Wartebetrieb. Dabei arbeitet der Leistungsoszillator OSZ wieder im diskontinuierlichen Betrieb. Da eine in FIG. 3 gezeigte Ladekontrollschaltung CC den Ladestrom I_{CHA} unterbricht, treten am induktiven Koppler keine Lastschwankungen auf und in der Ladevorrichtung CU werden keine Steuersignale S_{C} 1 und S_{C} 2 zum kontinuierlichen Einschalten des Leistungsoszillators OSZ generiert. Zum Mobiltelefon MU wird eine mittlere Leistung von wenigen Zehnteln Watt zum Laden übertragen, die für eine Erhaltungsladung genutzt werden kann.

Die Ladevorrichtung CU bleibt auch im zweiten Wartebetrieb, wenn irrtümlich ein metallischer oder magnetischer Fremdkörper in den Bereich des magnetischen Wechselfeldes gelangt oder ein Mobiltelefon MU ohne sekundären Kopplerteil angekoppelt ist. Somit werden eine unzulässige hohe Erwärmung und mögliche Brandgefahr vermieden.

FIG. 2 zeigt eine spezielle Ausführung der Ladevorrichtung CU. Der Leistungsoszillator OSZ ist aus den genannten Gründen vorteilhaft als Resonanzwandler und als Gegentaktoszillator ausgeführt. Anstelle der primären Wicklung W_{PRI} bilden die Wicklungen W1 und W2, welche sich auf einen U-förmigen Ferritkern F1 befinden, den primären Teil des induktiven Wandlers. Jede Wicklung bildet gemeinsam mit Kapazitäten C1 und C3 bzw. C2 und C4 einen Resonanzkeis. Die Resonanzkreise werden über Schalter Q1 und Q2 im Gegentakt mit der Betriebsspannung U_{IN} verbunden. Die Resonanzkreiskapazitäten C1 und C3 bzw. C2 und C4 dienen außerdem zur kapazitiven Mitkopplung. Der Leistungsoszillator OSZ schwingt im vorliegenden Beispiel in Abhängigkeit von der sekundären Belastung mit einer Schwingfrequenz f_{OSZ} in einem Bereich von etwa 500 < f_{OSZ} < 600 kHz. Im vorliegenden Beispiel wird ausschließlich die Lastabhängigkeit des Betriebsstroms I_{IN} vom Leistungsoszillator OSZ als Kriterium für die Erkennung genutzt. Ein einfaches RC-Filter FI mit einem Widerstand R_{V} im Zweig des Betriebsstroms I_{IN} gewährleistet, daß die Eingänge des Signalverstärkers AMP im wesentlichen nur Spannungsänderungen erhalten, die weit unterhalb der Schwingfrequenz f_{OSZ} des Leistungsoszillators OSZ liegen. Damit werden Laständerungen, deren Burstfrequenz f_{BU} beispielsweise etwa bei 20 kHz liegt, infolge des großen Frequenzabstandes gut von der Schwingfrequenz f_{OSZ} getrennt. Der Signalverstärker AMP ist vorteilhaft ein Differenzverstärker, der nur Signale verstärkt, welche oberhalb eines Schwellwertes liegen. Auf diese Weise wird mit einfachen Mitteln erreicht, daß das Steuersignal S_{C} 1 nur auftritt, wenn auf der Sekundärseite tatsächlich Laständerungen mit der Burstfrequenz f_{BU} auftreten.

Der Impulsgenerator PG schaltet im vorliegenden Beispiel den Resonanzwandler OSZ jeweils nach etwa einer Sekunde für eine Dauer 10 ms < T_{ON} < 15 ms ein. Darüber hinaus zeigt FIG. 2 mit der Diode D 2 und der Kapazität C 5 eine einfache Möglichkeit zum Gewinnen einer Betriebsspannung für den Signalverstärker AMP. Diese nutzt die Schaltspannung über den Schaltern Q1 und Q2, deren Spitzenwert über der Eingangsgleichspannung U_{IN} liegt.

FIG. 3 zeigt ein Mobiltelefon MU, dessen übrige Schaltung durch den Block RT dargestellt ist. In der speziellen Ausführung ist der sekundäre elektronische Schalter Q3 in den Regelkreis eines elektronischen Schaltreglers einbezogen, der zum Laden der Akkumulatoren A eine stabilisierte sekundäre Gleichspannung U_{CHA} über einen Ladekondensator C7 durch periodisches Ein- und Ausschalten bereitstellt. Die Gleichspannung U_{CHA} versorgt über die Ladekontrollschaltung CC die Akkumulatoren A mit Ladestrom I_{CHA}. Anstelle der sekundären Wicklung W_{SEC} bilden die Wicklungen W3 und W4 den sekundären Teil des induktiven Wandlers. Für eine effektive Leistungsübertragung befinden sich diese analog zu denen in der Ladevorrichtung möglichst an den Enden eines U-förmigen Ferritkerns F2.

Jede der Wicklungen W3 und W4 bildet mit einer Kapazität C 6.1 bzw. C 6.2 einen Resonanzkreis, welcher vorteilhaft bei Vollast mit der Schwingfrequenz f_{OSZ} des Leistungsoszillators OSZ schwingt. Die Dioden D 1.1 und D 1.2 bilden im vorliegenden Fall den Ladegleichrichter. Die Ladekontrollschaltung CC steuert und überwacht das Laden der Akkumulatoren A. Der Ladestrom I_{CHA} entlädt unabhängig vom Schaltzustand des Schalters Q3 kontinuierlich den Ladekondensator C7. Ein Regelverstärker CA mit einer Hysterese in der Übertragungsfunktion vergleicht über den Spannungsteiler R1, R2 die sekundäre Gleichspannung U_{CHA} mit einem Referenzwert U_{REF} und schließt beim Unterschreiten eines Mindestwertes den Schalter Q3 über den Transistor Q4 den Widerstand R4 und dem Treiber DRV. Das magnetische Wechselfeld des induktiven Kopplers erregt die sekundären Resonanzkreise W3//C 6.1 und W4// C6.2 und der Ladekondensator C7 wird bis zum Erreichen eines oberen Grenzwertes geladen. Dabei belastet der Ladekondensator C7 den induktiven Koppler während eines Schwingungspaketes, das mehrere Schwingungen der Schwingfrequenz f_{OSZ} enthält. Danach bleibt der Koppler bis zum wiederholten Unterschreiten des Mindestwertes am Ladekondensator C7 unbelastet. Auf diese Weise entsteht eine verlustfreie Lastmodulation, die mit den beschriebenen Mitteln in der Ladevorrichtung erkannt werden kann.

Mit einer entsprechenden Dimensionierung des Schaltreglers wird so die sekundäre Gleichspannung U_{CHA} verlustfrei eingestellt, daß eine geringe Differenz zur Ladeendspannung der Akkumulatoren A besteht. Dadurch wird in der Ladekontrollschaltung CC ein Minimum an elektrischer Leistung umgesetzt.

Die Burstfrequenz f_{BU} kann in weiten Grenzen frei gewählt werden. Sie sollte für eine einfache Selektion nach oben einen entsprechenden Abstand zur Schwingfrequenz f_{OSZ} und nach unten so hoch liegen, daß der sekundäre Kopplerteil während einer Aktivierungsdauer T_{ON} durch mehrere Schwingungspakete OP belastet wird. Die Burstfrequenz f_{BU} sollte bei Telefonen zum Vermeiden von Störungen des Telefonverkehrs nicht im Bereich der Sprachfrequenz liegen. Auch der Frequenzbereich von Langwellensendern kann zu Funktionsstörungen führen.

## Patentansprüche

1. Ladevorrichtung (CU) zur induktiver Energieübertragung zu einem mobilen elektrischen Gerät (MU), die einen Leistungsoszillator (OSZ) mit einer Schwingfrequenz, den primären Teil (W_{PRI}) eines induktiven Kopplers und Erkennungsmittel (SEL, AMP, RE, FM-DM) aufweist, wobei der Leistungsoszillator angeordnet ist, mittels des primären Teils des induktiven Kopplers ein magnetisches Wechselfeld zu erzeugen, und wobei die Ladevorrichtung einen Wartebetrieb und einen Ladebetrieb hat, **dadurch gekennzeichnet, dass** die Erkennungsmittel angeordnet sind, aufgrund eines periodischen Wechsel der induktiven Belastung des induktiven Kopplers im Rhythmus einer Burstfrequenz (f_{BU}) mindestens ein Steuersignal (S_{C} 1, S_{C} 2) zu generieren, um die Höhe der Leistung des magnetischen Wechselfelds, für den Ladebetrieb von einen im Wartebetrieb geringeren Mittelwert auf einen höheren Mittelwert umzuschalten.

2. Ladevorrichtung nach Anspruch 1, **dadurch gekennzeichnet, dass** der Leistungsoszillator (OSZ) als selbstschwingende Leistungsstufe ausgeführt ist, so dass sich im Rhythmus (f_{BU}) der periodischen Wechsel der induktiven Belastung elektrische Betriebswerte, wie die Stromaufnahme (I_{IN}), die Schwingfrequenz (f_{OSZ}) des Oszillators (OSZ) und die Schaltphase, entsprechend ändern.

3. Ladevorrichtung nach Anspruch 1 und 2, **dadurch gekennzeichnet, dass** die Erkennungsmittel (SEL, AMP, RE) das mobile Gerät (MU) infolge von Modulation der Stromaufnahme (I_{IN}) erkennen, welche die periodischen Wechsel der induktiven Belastung verursachen.

4. Ladevorrichtung nach Anspruch 1 und 2, **dadurch gekennzeichnet, dass** die Erkennungsmittel (FM-DEM) das mobile Gerät (MU) infolge Modulation der Schwingfrequenz (f_{OSZ}) des Leistungsoszillators (OSZ) erkennen, welche die periodischen Wechsel der induktiven Belastung verursachen.

5. Ladevorrichtung nach Anspruch 1, **gekennzeichnet durch** einen Impulsgenerator (PG) zum Erzeugen einer niederfrequenten Pulsfolge (S_{C} 3) zum periodischen Einschalten des magnetischen Wechselfeldes, wobei die Pulsfolge (S_{C} 3) zeitlich so ausgelegt ist, dass das magnetische Wechselfeld für eine Aktivierungsdauer (T_{ON}) eingeschaltet und für eine wesentlich längere Deaktivierungsdauer (T_{OFF}) ausgeschaltet ist und dass die Aktivierungsdauer (T_{ON}) um ein Vielfaches länger ist, als die Dauer eines periodischen Wechsels der induktiven Belastung, so dass während einer Aktivierungsdauer (T_{ON}) des Leistungsoszillator (OSZ) der induktive Koppler mehrmals **durch** Schwingungspakete (OP) belastet wird.

6. Ladevorrichtung nach Anspruch 5, **gekennzeichnet durch** eine Oderschaltung (OR), die aus mindestens einem von den Erkennungsmitteln (SEL, AMP, RE und FM-DEM) generiertem Steuersignal (S_{C} 1, S_{C} 2) und der niederfrequenten Pulsfolge (S_{C} 3) ein Schaltsignal (S_{C}) bildet, welches beim Fehlen der periodischen Wechsel der induktiven Belastung den Leistungsoszillator (OSZ) in den Wartebetrieb setzt, bei dem der Leistungsoszillator (OSZ) diskontinuierlich nur während der Aktivierungsdauer (T_{ON}) Leistung für den induktiven Koppler bereitstellt, um das magnetische Wechselfeld zu erzeugen.

7. Mobiles elektrisches Gerät (MU) zur induktiver Energieübertragung von einer Ladevorrichtungdas den sekundären Teil (sec) eines induktiven Kopplers, Akkumulatoren (A) und Laststeuermittel (Q3) aufweist, wobei die Laststeuermittel zwischen dem sekundären Teil des induktiven Kopplers und den Akkumulatoren angeordnet sind, **dadurch gekennzeichnet, dass** die Laststeuermittel angeordnet sind, unabhängig von einer Schwingfrequenz (f_{OSZ}) eines magnetisches Wechselfeldes, das für die induktiver Energieübertragung benutzt wird, den Stromfluss im sekundären Teil (W_{SEC}) des induktiven Kopplers im Rhythmus einer Burstfrequenz (f_{BU}) zu ändern, so dass die daraus resultierende alternierende induktive Belastung des Kopplers über das magnetische Wechselfeld eine der Belastung entsprechende alternierende Signalkomponente überträgt.

8. Mobiles elektrisches Gerät (MU) nach Anspruch 7, **dadurch gekennzeichnet, dass** die Laststeuermittel ein sekundärer elektronischer Schalter (Q3) bildet, welcher als Stellglied in einen Regelkreis einbezogen ist, der im Schaltbetrieb arbeitet, um durch alternierendes Ein- und Ausschalten die Gleichspannung oder den Gleichstrom zum Laden der Akkumulatoren (A) zu stabilisieren.

9. Mobiles elektrisches Gerät (MU) nach Anspruch 7, **dadurch gekennzeichnet, dass** die Laststeuermittel im hochfrequenten Wechselstromzweig zwischen dem sekundären Kopplerteil und dem Ladegleichrichter angeordnet sind.

10. Mobiles elektrisches Gerät (MU) nach Anspruch 7, **dadurch gekennzeichnet, dass** ein Betätigen der Laststeuermittel mit einer Burstfrequenz (f_{BU}) erfolgt, die unterhalb der Schwingfrequenz (f_{OSZ}) liegt, so dass der induktive Koppler jeweils für die Dauer von mehreren periodischen Schwingungen (f_{OSZ}) belastet wird.

## Claims

1. A charging device (CU) for the inductive transmission of energy to a mobile electric unit (MU), including a power oscillator (OSZ) with an oscillation frequency, the primary component (W_{PRI}) of an inductive coupler, and recognition means (SEL, AMP, RE, FM-DM), wherein the power oscillator is arranged to generate an alternating magnetic field by the aid of the primary component of the inductive coupler, and wherein the charging device has a disconnected mode and a charging mode, **characterized in that** the recognition means are arranged to generate at least one control signal (S_{c}1, S_{c}2) due to a periodic change of the inductive load of the inductive coupler in the rhythm of a burst frequency (f_{BU}) in order to switch the power level of the alternating magnetic field for the charging operation from a lower average in the disconnected mode to a higher average.

2. A charging device according to claim 1, **characterized in that** the power oscillator (OSZ) is designed as a self-oscillating power stage such that electrical operating values such as the power input (I_{IN}), the oscillating frequency (f_{OSZ}) of the oscillator (OSZ), and the switching phase change accordingly in the rhythm (f_{BU}) of the periodic change of the inductive load.

3. A charging device according to claim 1 or 2, **characterized in that** the recognition means (SEL, AMP, RE) recognize the mobile unit (MU) due to modulation of the power input (I_{IN}), which cause the periodic change of the inductive load.

4. A charging device according to claim 1 or 2, **characterized in that** the recognition means (FM-DEM) recognize the mobile unit (MU) due to modulation of the oscillating frequency (f_{OSZ}) of the power oscillator (OSZ), which cause the periodic change of the inductive load.

5. A charging device according to claim 1, **characterized by** a pulse generator (PG) for generating a low-frequency pulse sequence (S_{c} 3) for periodically turning on the alternating magnetic field, wherein the pulse sequence (S_{c}3) is designed in terms of time such that the alternating magnetic field is turned on for an activation time (T_{ON}) and turned off for a substantially longer deactivation time (T_{OFF}), and that the activation time (T_{ON}) is longer by a multiple than the time of a periodic change of the inductive load such that the inductive coupler is loaded several times by oscillation packets (OP) during an activation time (T_{ON}) of the power oscillator (OSZ).

6. A charging device according to claim 5, **characterized by** an OR circuit (OR), which forms a switching signal (S_{c}) from at least one control signal (S_{c}1, S_{c}2) generated by the recognition means (SEL, AMP, RE and FM-DEM) and the low-frequency pulse sequence (S_{c}3), which switching signal at a missing periodic change of the inductive load sets the power oscillator (OSZ) into the disconnected mode, in which the power oscillator (OSZ) provides discontinuously power for the inductive coupler only during the activation time (T_{ON}) in order to generate the alternating magnetic field.

7. A mobile electric unit (MU) for the inductive energy transmission from a charging unit, including the secondary component (W_{SEC}) of an inductive coupler, accumulators (A) and load control means (Q3), wherein the load control means are arranged between the secondary component of the inductive coupler and the accumulators, **characterized in that** the load control means are arranged to change, irrespectively of an oscillation frequency (f_{OSZ}) of an alternating magnetic field used for the inductive energy transmission, the current flow in the secondary component (W_{SEC}) of the inductive coupler in the rhythm of a burst frequency (f_{BU}) such that the resulting alternating inductive load of the coupler via the alternating magnetic field transmits an alternating signal component corresponding to said load.

8. A mobile electric unit (MU) according to claim 7, **characterized in that** the load control means form a secondary electronic switch (Q3) included as a control element in a control circuit operating in the switching mode to stabilize the direct voltage or the direct current for charging the accumulators (A) by alternating turning on and off.

9. A mobile electric unit (MU) according to claim 7, **characterized in that** the load control means are arranged in the high-frequency AC branch between the secondary coupler component and the charging rectifier.

10. A mobile electric unit (MU) according to claim 7, **characterized in that** the actuation of the load control means is effected at a burst frequency (f_{BU}) lower than the oscillation frequency (f_{OSZ}) such that the inductive coupler is each loaded for the time of several periodic oscillations (f_{OSZ}).

## Revendications

1. Dispositif de charge (CU) servant au transfert d'énergie par induction vers un appareil électrique mobile (MU), lequel dispositif de charge présente un oscillateur de puissance (OSZ) à fréquence d'oscillations, la partie primaire (W_{PRI}) d'un coupleur à induction et des moyens d'identification (SEL, AMP, RE, FM-DM), où l'oscillateur de puissance est disposé pour produire un champ alternatif magnétique au moyen de la partie primaire du coupleur à induction, et où le dispositif de charge a un fonctionnement en mode attente et un fonctionnement en mode charge,
**caractérisé en ce que** les moyens d'identification sont disposés pour générer au moins un signal de commande (S_{c} 1, S_{c} 2), en raison d'une variation périodique de la charge inductive du coupleur à induction, au rythme d'une fréquence de salves (f_{BU}), pour faire passer le niveau de la puissance du champ alternatif magnétique, pour le fonctionnement en mode charge, d'une valeur moyenne inférieure à une valeur moyenne supérieure dans le fonctionnement en mode attente.

2. Dispositif de charge selon la revendication 1, **caractérisé en ce que** l'oscillateur de puissance (OSZ) est réalisé comme un étage de puissance auto-oscillant, de sorte que des valeurs fonctionnelles électriques, comme la consommation de courant (I_{IN}), la fréquence d'oscillations (f_{OSZ}) de l'oscillateur (OSZ) et la phase de commutation, se modifient en conséquence, au rythme (f_{BU}) des variations périodiques de la charge inductive.

3. Dispositif de charge selon la revendication 1 ou 2, **caractérisé en ce que** les moyens d'identification (SEL, AMP, RE), suite à une modulation de la consommation de courant (I_{IN}), identifient l'appareil mobile (MU), lesquels moyens d'identification provoquent les modifications périodiques de la charge inductive.

4. Dispositif de charge selon la revendication 1 ou 2, **caractérisé en ce que** les moyens d'identification (FM-DEM), suite à une modulation de la fréquence d'oscillations (f_{OSZ}) de l'oscillateur de puissance (OSZ), identifient l'appareil mobile (MU), lesquels moyens d'identification provoquent les modifications périodiques de la charge inductive.

5. Dispositif de charge selon la revendication 1, **caractérisé par** un générateur d'impulsions (PG) servant à produire un train d'impulsions (S_{c} 3) à basse fréquence servant à la mise en oeuvre périodique du champ alternatif magnétique, où le train d'impulsions (S_{c} 3) est configuré, dans le temps, de manière telle que le champ alternatif magnétique soit mis en oeuvre pour une durée d'activation (T_{ON}) et supprimé pour une durée de désactivation beaucoup plus longue (T_{OFF}), et en ce que la durée d'activation (T_{ON}) est d'un multiple plus longue que la durée d'une variation périodique de la charge inductive, de sorte que, pendant une durée d'activation (T_{ON}) de l'oscillateur de puissance (OSZ), le coupleur à induction est chargé plusieurs fois par des paquets d'oscillations (OP).

6. Dispositif de charge selon la revendication 5, **caractérisé par** un circuit OU (OR) qui, à partir d'au moins un signal de commande (S_{c} 1, S_{c} 2) généré par l'un des moyens d'identification (SEL, AMP, RE et FM-DEM), et du train d'impulsions à basse fréquence (S_{c} 3), forme un signal de commutation (S_{c}) qui, en l'absence des variations périodiques de la charge inductive, fait fonctionner l'oscillateur de puissance (OSZ) en mode attente, mode de fonctionnement au cours duquel l'oscillateur de puissance (OSZ), de façon discontinue, fournit de la puissance au coupleur à induction, seulement pendant la durée d'activation (T_{ON}), pour produire le champ alternatif magnétique.

7. Appareil électrique mobile (MU) servant au transfert d'énergie par induction, à partir d'un dispositif de charge, lequel appareil électrique mobile présente la partie secondaire (W_{SEC}) d'un coupleur à induction, des batteries (A) et des moyens de commande de charge (Q3), où les moyens de commande de charge sont disposés entre la partie secondaire du coupleur à induction et les batteries,
**caractérisé en ce que** les moyens de commande de charge sont disposés pour modifier, indépendamment d'une fréquence d'oscillations (f_{OSZ}) d'un champ alternatif magnétique qui est utilisé pour le transfert d'énergie par induction, le flux de courant dans la partie secondaire (W_{SEC}) du coupleur à induction, au rythme d'une fréquence de salves (f_{BU}), de sorte que la charge inductive alternative en résultant, concernant le coupleur, transfère une composante de signal alternative correspondant à la charge, via le champ alternatif magnétique.

8. Appareil électrique mobile (MU) selon la revendication 7, **caractérisé en ce que** les moyens de commande de charge forment un commutateur (Q3) électronique secondaire qui, en tant qu'élément de réglage final, est intégré à un circuit de régulation qui fonctionne en mode commuté, pour stabiliser le courant continu ou la tension continue servant à charger les batteries (A), par des mises en marche et arrêts se produisant en alternance.

9. Appareil électrique mobile (MU) selon la revendication 7, **caractérisé en ce que** les moyens de commande de charge sont disposés, dans la partie de courant alternatif à haute fréquence, entre la partie secondaire du coupleur et le redresseur de charge.

10. Appareil électrique mobile (MU) selon la revendication 7, **caractérisé en ce qu'**un actionnement des moyens de commande de charge se produit à une fréquence de salves (f_{BU}) qui est inférieure à la fréquence d'oscillations (f_{OSZ}), de sorte que le coupleur à induction est chargé à chaque fois pour la durée de plusieurs oscillations (f_{OSZ}) périodiques.
